# EUROPEAN PATENT APPLICATION

(11) **EP 4 207 508 A1**
(43) Date of publication of application: **05.07.2023**
(21) Application number: 22216953.4
(22) Date of filing: 28.12.2022
(51) Int. Cl.: H01R 13/52, H01R 13/432, H01R 13/6592, H01R 24/20, H01R 27/02

(54) **CONNECTOR HOUSING ASSEMBLY, CONNECTOR AND CONNECTOR ASSEMBLY**

(30) Priority: 31.12.2021 CN 202111665088
(71) Applicant: Tyco Electronics Technology (SIP) Ltd., 215026 Suzhou (CN)
(72) Inventor: Huang, Jianlin, Suzhou, 215026 (CN); Pan, Feng, Suzhou, 215026 (CN); Zhu, Minjie, Suzhou, 215026 (CN)
(74) Representative: Grünecker Patent- und Rechtsanwälte PartG mbB

(57) **Abstract**

The present invention discloses a connector housing assembly, a connector and a connector assembly. The connector housing assembly comprises of: an inner housing (200) which is formed with terminal mounting holes (211, 212, 213) for fixedly mounting a plurality of terminals (10, 20, 30); a cable seal (210, 220) installed in the inner housing (200) for realizing the sealing between the inner housing (200) and a cable (1, 2, 3) extending into the inner housing (200); and a housing seal (230) sleeved on the outer side of the inner housing (200) for realizing the sealing between the inner housing (200) and a mating housing of a mating connector. In the present invention, both the cable seal and the housing seal are provided on the inner housing. Therefore, the present invention simplifies the structure of the connector, reduces the installation difficulty of the cable seal, and reduces the volume of the connector.

## Description

### CROSS-REFERENCE TO RELATED APPLICATION

This application claims the benefit of Chinese Patent Application No. CN202111665088.5 filed on December 31, 2021 in the State Intellectual Property Office of China, the whole disclosure of which is incorporated herein by reference.

### BACKGROUND OF THE INVENTION

### Field of the Invention

The present invention relates to a connector housing assembly, a connector including the connector housing assembly, and a connector assembly including the connector.

### Description of the Related Art

In the prior art, a connector for a laser radar generally includes an outer housing, an inner housing provided in the outer housing, and terminals provided in the inner housing for transmitting signals (e.g., Ethernet signals) and power. In the prior art, in order to realize the waterproof sealing function, it is usually necessary to set a cable seal in the inner housing, and the cable seal is sleeved on the cable to realize the sealing between the cable and the housing. In addition, in order to realize the sealing between the outer housing and a mating housing of a mating connector, it is also necessary to provide a housing seal in the outer housing.

However, in the prior art, since the cable seal and the housing seal need to be provided in the inner housing and the outer housing respectively, the structure of the connector is complicated and the volume is too large.

### SUMMARY OF THE INVENTION

The present invention has been made to overcome or alleviate at least one aspect of the above mentioned disadvantages.

According to an aspect of the present invention, there is provided a connector housing assembly. The connector housing assembly comprises of an inner housing which is formed with terminal mounting holes for fixedly mounting a plurality of terminals; a cable seal installed in the inner housing for realizing the sealing between the inner housing and a cable extending into the inner housing; and a housing seal sleeved on the outer side of the inner housing for realizing the sealing between the inner housing and a mating housing of a mating connector.

According to an exemplary embodiment of the present invention, the cable seal comprises of: a first cable seal for sealing some cables of the connector; and / or a second cable seal for sealing other cables of the connector.

According to another exemplary embodiment of the present invention, a first accommodation chamber adapted to accommodate the first cable seal and a second accommodation chamber adapted to accommodate the second cable seal are formed in the inner housing.

According to another exemplary embodiment of the present invention, a seal mounting portion adapted to mount the housing seal is formed on the outer side of the inner housing.

According to another exemplary embodiment of the present invention, the housing seal is a seal ring which is positioned in a seal mounting portion formed on the outer side of the inner housing; an outer circumferential surface of the housing seal is radially spaced apart from an inner circumferential surface of the outer housing of a connector by a predetermined gap to allow the mating housing to be inserted between the housing seal and the outer housing.

According to another exemplary embodiment of the present invention, the cable seal is adapted to simultaneously seal a plurality of different types and / or a plurality of different sizes of cables.

According to another exemplary embodiment of the present invention, the cable seal includes a first cable seal and a second cable seal, at least two different cable through holes are formed in at least one of the first cable seal and the second cable seal.

According to another exemplary embodiment of the present invention, the connector housing assembly further comprises a cable extending into the inner housing and passing through the cable seal, the cable includes a signal cable for transmitting signals and a power cable for transmitting power.

According to another exemplary embodiment of the present invention, the cable comprises of: a first cable for transmitting a first signal; a second cable for transmitting a second signal different from the first signal; and a third cable for transmitting power.

According to another exemplary embodiment of the present invention, the connector housing assembly further comprises of: a first terminal provided in the inner housing and electrically connected to the first cable; a second terminal provided in the inner housing and electrically connected to the second cable; and a third terminal provided in the inner housing and electrically connected to the third cable.

According to another exemplary embodiment of the present invention, the connector housing assembly further comprises a shield provided in the inner housing, the first cable is used for transmitting Ethernet signals and has a shielding layer, the shield is electrically connected to the shielding layer of the first cable, and the first terminal is at least partially accommodated in the shield.

According to another exemplary embodiment of the present invention, the cable seal includes a first cable seal and a second cable seal; a first cable through hole adapted to mate with the first cable is formed in the first cable seal; a second cable through hole adapted to mate with the second cable and a third cable through hole adapted to mate with the third cable are formed in the second cable seal.

According to another exemplary embodiment of the present invention, the outer diameter of the first cable is larger than the outer diameter of the second cable and the third cable, and the inner diameter of the first cable through hole is larger than the inner diameter of the second cable through hole and the third cable through hole; the outer diameter of the third cable is larger than the outer diameter of the second cable, and the inner diameter of the third cable through hole is larger than the inner diameter of the second cable through hole.

According to another exemplary embodiment of the present invention, the first cable seal is a seal ring and is sleeved on the first cable; the second cable seal includes a block shaped sealing body in which the second cable through hole and the third cable through hole are formed.

According to another exemplary embodiment of the present invention, an elastic latch for locking the first terminal in the inner housing is integrally formed on the inner housing; a slot for inserting a locking member is formed in the inner housing, and the second terminal and the third terminal are adapted to be locked in the inner housing by the locking member inserted into the slot.

According to another exemplary embodiment of the present invention, the inner housing is formed with a mounting portion adapted to mount a shield spring piece, and the shield is adapted to be electrically connected to a mating shield of the mating connector via the shield spring piece mounted on the mounting portion.

According to another aspect of the present invention, there is provided a connector. The connector comprises the above connector housing assembly and an outer housing. The inner housing is at least partially accommodated in the outer housing and fixedly connected with the outer housing.

According to an exemplary embodiment of the present invention, the outer housing is arranged around the housing seal, and a gap is formed between the outer housing and the housing seal for accommodating a mating housing of a mating connector.

According to another aspect of the present invention, there is provided a connector assembly. The connector assembly comprises of: the above connector; and a mating connector adapted to mate with the connector.

In the foregoing exemplary embodiments according to the present invention, both the cable seal and the housing seal are provided on the inner housing. Therefore, the present invention simplifies the structure of the connector, reduces the installation difficulty of the cable seal, and reduces the volume of the connector.

### BRIEF DESCRIPTION OF THE DRAWINGS

The above and other features of the present invention will become more apparent by describing in detail exemplary embodiments thereof with reference to the accompanying drawings, in which:
Fig. 1 shows an illustrative perspective view of a connector according to an exemplary embodiment of the present invention;
Fig. 2 shows a longitudinal sectional view of a connector according to an exemplary embodiment of the present invention;
Fig. 3 shows an illustrative perspective view of a connector according to an exemplary embodiment of the present invention, in which the outer housing is removed;
Fig. 4 shows an illustrative view of an inner housing of a connector according to an exemplary embodiment of the present invention, in which a shielding spring piece is shown;
Fig. 5 shows an illustrative exploded view of a connector according to an exemplary embodiment of the present invention;
Fig. 6 shows an illustrative exploded view of an inner housing, a cable seal and a housing seal of a connector according to an exemplary embodiment of the present invention;
Fig. 7 shows an illustrative assembly diagram of an inner housing, a cable seal and a housing seal of a connector according to an exemplary embodiment of the present invention;
Fig. 8 shows an illustrative assembly diagram of a cable and a cable seal of a connector according to an exemplary embodiment of the present invention; and
Fig. 9 shows an illustrative perspective view of the second cable seal shown in Fig. 8.

### DETAILED DESCRIPTION OF PREFERRED EMBODIMENTS OF THE IVENTION

Exemplary embodiments of the present disclosure will be described hereinafter in detail with reference to the attached drawings, wherein the like reference numerals refer to the like elements. The present disclosure may, however, be embodied in many different forms and should not be construed as being limited to the embodiment set forth herein; rather, these embodiments are provided so that the present disclosure will be thorough and complete, and will fully convey the concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

According to a general concept of the present invention, there is provided a connector housing assembly. The connector housing assembly comprises of: an inner housing which is formed with terminal mounting holes for fixedly mounting a plurality of terminals; a cable seal installed in the inner housing for realizing the sealing between the inner housing and a cable extending into the inner housing; and a housing seal sleeved on the outer side of the inner housing for realizing the sealing between the inner housing and a mating housing of a mating connector.

According to another general concept of the present invention, there is provided a connector. The connector comprises the above connector housing assembly and an outer housing. The inner housing is at least partially accommodated in the outer housing and fixedly connected with the outer housing.

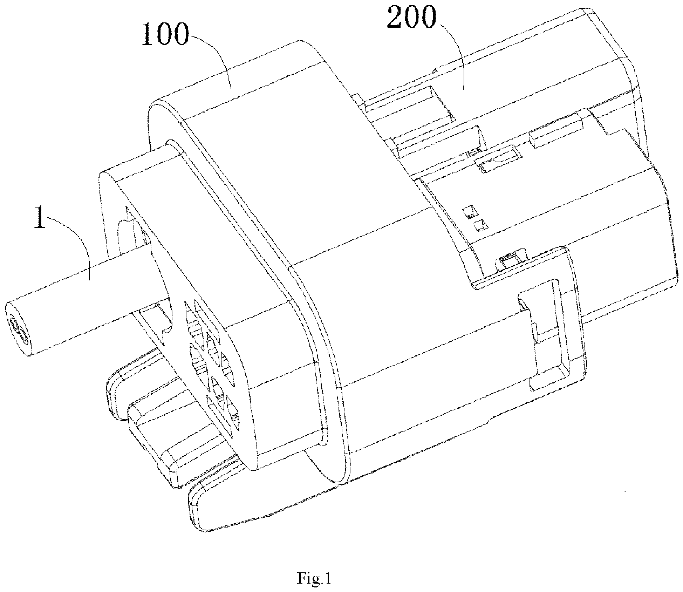

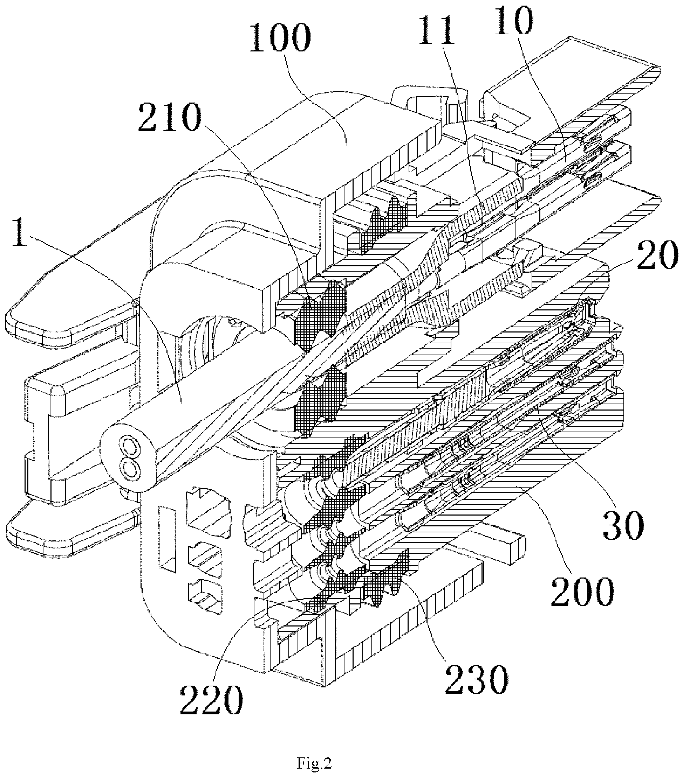

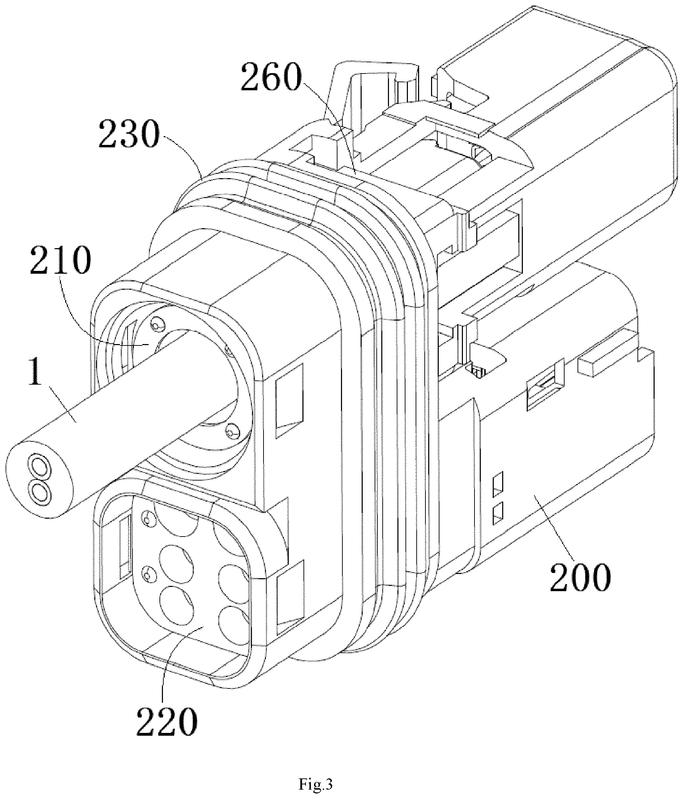

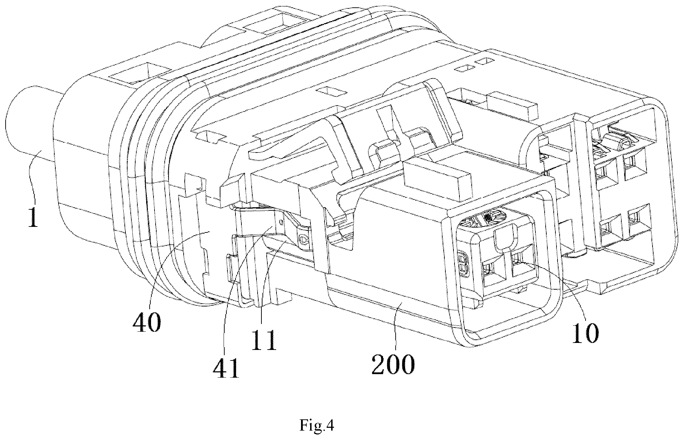

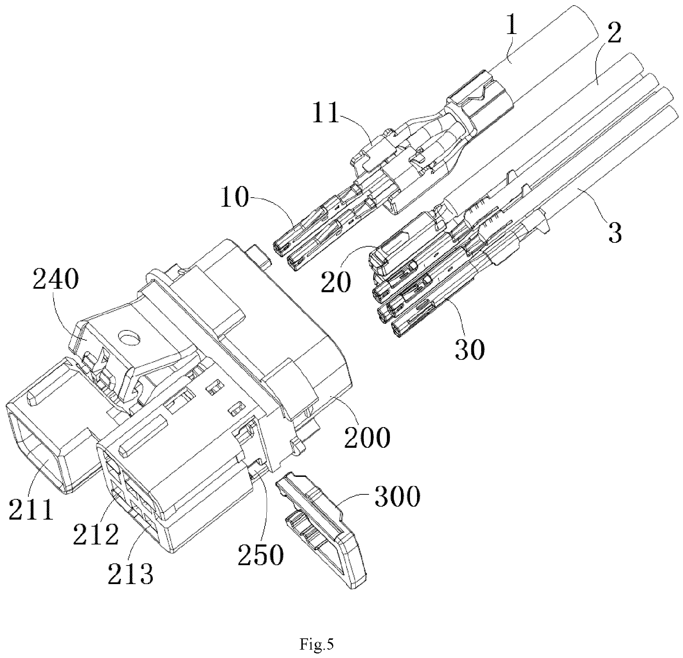

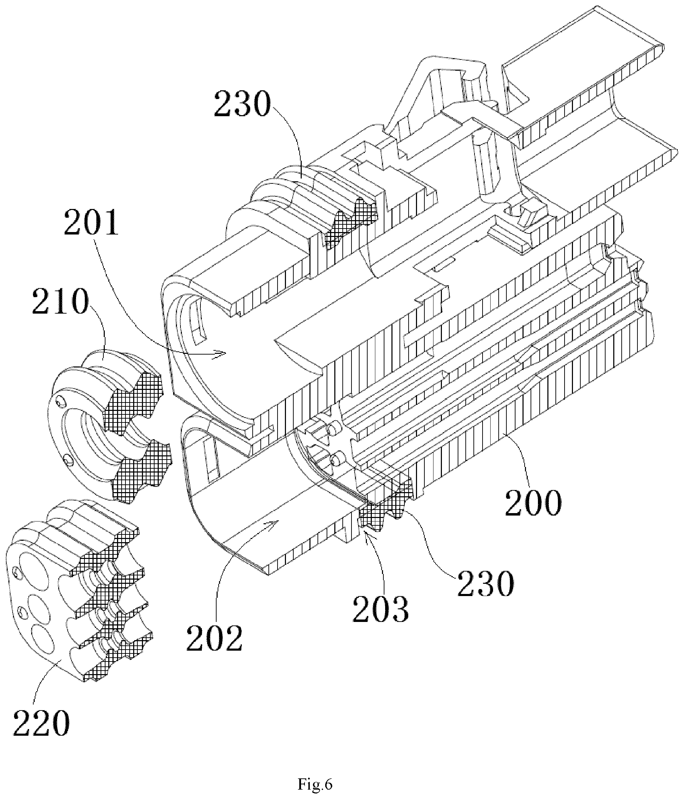

Fig. 1 shows an illustrative perspective view of a connector according to an exemplary embodiment of the present invention. Fig. 2 shows a longitudinal sectional view of a connector according to an exemplary embodiment of the present invention. Fig. 3 shows an illustrative perspective view of a connector according to an exemplary embodiment of the present invention, in which the outer housing 100 is removed. Fig. 4 shows an illustrative view of an inner housing of a connector according to an exemplary embodiment of the present invention, in which a shielding spring piece 40 is shown. Fig. 5 shows an illustrative exploded view of a connector according to an exemplary embodiment of the present invention. Fig. 6 shows an illustrative exploded view of the outer housing 100, the cable seals 210, 220, and the housing seal 230 of the connector according to an exemplary embodiment of the present invention.

As shown in FIGS. 1 to 6, in the illustrated embodiment, a connector suitable for connection with, for example, laser radar is disclosed, which includes a power terminal capable of transmitting power and a signal terminal capable of transmitting signals. The connector includes a connector housing assembly, an outer housing 100 and a cable 223. The connector housing assembly includes an inner housing 200, cable seals 210 and 220, and a housing seal 230. The inner housing 200 is at least partially accommodated in the outer housing 100 and may be fixed to the outer housing 100. The cables 1, 2 and 3 extend into the outer housing 100 and the inner housing 200 and pass through the cable seals 210 and 220. The inner housing 200 is provided with terminal mounting holes 211, 212, 213 for fixedly mounting a plurality of terminals 10, 20, 30. The outer housing 100 is provided around the housing seal 230, and a gap is formed between the outer housing 100 and the housing seal 230 for accommodating a mating housing of a mating connector (not shown).

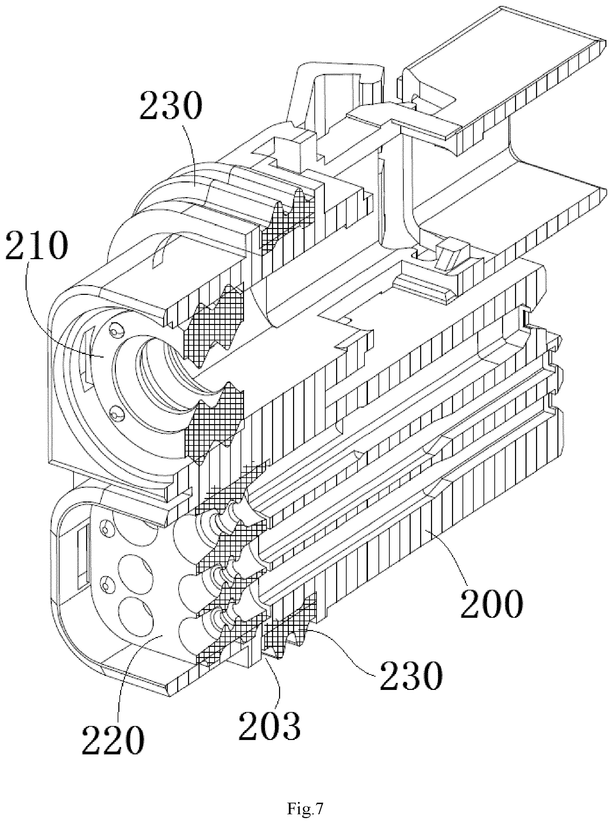

Fig. 7 shows an illustrative assembly view of the inner housing 200, the cable seals 210 and 220, and the housing seal 230 of the connector according to an exemplary embodiment of the present invention.

As shown in Fig. 1 to Fig. 7, in the illustrated embodiment, the cable seals 210 and 220 are accommodated in the inner housing 200 to realize the sealing between the inner housing 200 and the cables 1, 2 and 3 extending into the inner housing 200. The housing seal 230 is sleeved on the outer side of the inner housing 200 for realizing the sealing between the inner housing 200 and the mating housing (not shown) of the mating connector.

As shown in FIGS. 1 to 7, in the illustrated embodiment, the cable seals 210 and 220 include a first cable seal 210 and a second cable seal 220. The first cable seal 210 is used to seal some cables 1 of the connector. The second cable seal 220 is used to seal other cables 2, 3 of the connector.

As shown in FIGS. 1 to 7, in the illustrated embodiment, a first accommodation chamber 201 and a second accommodation chamber 202 are formed in the inner housing 200. The first accommodation chamber 201 is used to accommodate the first cable seal 210. The second accommodation chamber 202 is used to accommodate the second cable seal 220. The first accommodation chamber 201 and the second accommodation chamber 202 of the inner housing 200 are isolated from each other. A seal mounting portion 203 adapted to receive the housing seal 230 is formed on the outer side of the inner housing 200.

As shown in FIGS. 1 to 7, in the illustrated embodiment, the housing seal 230 is a seal ring and is positioned in the seal mounting portion 203 formed on the outer side of the inner housing 200. The outer circumferential surface of the housing seal 230 is radially spaced apart from the inner circumferential surface of the outer housing 100 of the connector by a predetermined gap to allow the mating housing of the mating connector to be inserted between the housing seal 230 and the outer housing 100. That is, the housing seal 230 is radially pressed between the mating housing of the mating connector and the outer peripheral wall of the inner housing 200, thereby achieving a seal between them.

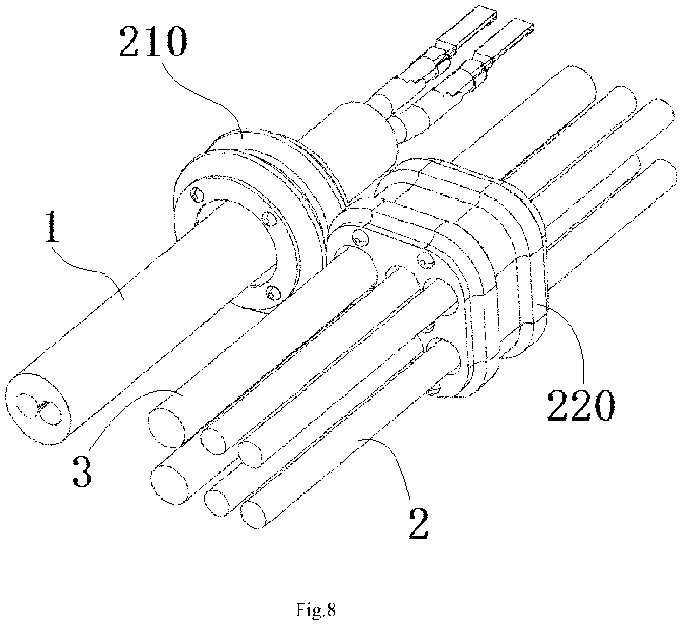

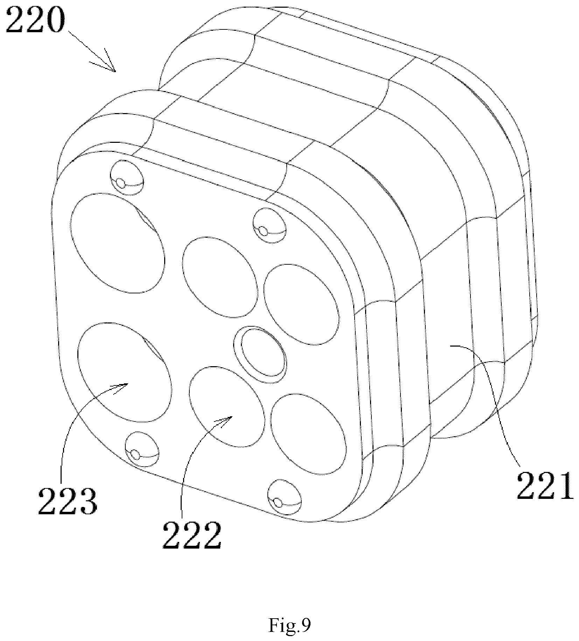

Fig. 8 shows an illustrative assembly diagram of cables 1, 2, 3 and cable seals 210, 220 of a connector according to an exemplary embodiment of the present invention; Fig. 9 shows an illustrative perspective view of the second cable seal 220 shown in Fig. 8.

As shown in FIGS. 1 to 9, in the illustrated embodiment, the cable seals 210, 220 are adapted to simultaneously seal a plurality of different types and / or a plurality of different sizes of cables 1, 2, 3. For example, a plurality of different cable through holes 202, 203 suitable for fitting with a plurality of different types and / or a plurality of different sizes of cables 1, 2, 3 may be formed in the cable seals 210, 220.

As shown in FIGS. 1 to 9, in the illustrated embodiment, the cable seals 210 and 220 include a first cable seal 210 and a second cable seal 220. At least two different cable through holes 202 and 203 are formed in at least one of the first cable seal 210 and the second cable seal 220 for mating with at least two different types and / or different sizes of cables 2 and 3.

As shown in Fig. 1 to Fig. 9, in an exemplary embodiment of the present invention, a connector is also disclosed, which includes the aforementioned connector housing assembly, a housing 100, and cables 1, 2, and 3. The inner housing 200 is at least partially accommodated in the outer housing 100. The cables 1, 2, 3 extend into the outer housing 100 and the inner casing 200 and pass through the cable seals 210 and 220.

As shown in FIGS. 1 to 9, in the illustrated embodiment, the cables 1, 2, and 3 include signal cables 1, 2 for transmitting signals and power cables 3 for transmitting power. That is, the connector is a hybrid connector suitable for simultaneously transmitting signals and power. For example, the connector may be a hybrid connector for connecting with laser radar.

As shown in FIGS. 1 to 9, in the illustrated embodiment, the cables 1, 2, and 3 include a first cable 1, a second cable 2, and a third cable 3. The first cable 1 is used to transmit a first signal, for example, an Ethernet signal. The second cable 2 is used for transmitting a second signal different from the first signal, for example, for transmitting a LAN signal. The third cable 3 is used to transmit power.

As shown in FIGS. 1 to 9, in the illustrated embodiment, the connector housing assembly further includes a first terminal 10, a second terminal 20, and a third terminal 30. The first terminal 10 is provided in the first terminal mounting hole 211 of the inner housing 200 and electrically connected to the first cable 1. The second terminal 20 is provided in the second terminal mounting hole 212 of the inner housing 200 and electrically connected to the second cable 2. The third terminal 30 is provided in the third terminal mounting hole 213 of the inner housing 200 and electrically connected to the third cable 3.

As shown in FIGS. 1 to 7, in the illustrated embodiment, the inner housing 200 is integrally formed with an elastic latch 240 for locking the first terminal 10 in the inner housing 200. A slot 250 adapted to insert a locking member 300 is formed in the inner housing 200. The second terminal 20 and the third terminal 30 are adapted to be locked in the inner housing 200 by the locking member 300 inserted into the slot 250.

As shown in FIGS. 1 to 7, in the illustrated embodiment, a mounting portion 260 suitable for mounting the shield spring piece 40 is formed on the inner housing 200. The shield 11 is adapted to be electrically connected to a mating shield of the mating connector via the shield spring piece 40 mounted on the mounting portion 260. In the illustrated embodiment, the shield spring piece 40 has an elastic arm 41 adapted to be in electrical contact with the shield 11 and the mating shield at the same time.

As shown in FIGS. 1 to 9, in the illustrated embodiment, the first cable 1 is an Ethernet cable for transmitting Ethernet signals, and the connector housing assembly further includes a shield 11 provided in the inner housing 200. The shield 11 is electrically connected to the shielding layer of the first cable 1, and the first terminal 10 is at least partially accommodated in the shield 11. Thus, electromagnetic shielding can be provided for the first terminal 10 to prevent signal interference.

As shown in FIGS. 1 to 9, in the illustrated embodiment, the cable seals 210 and 220 include a first cable seal 210 and a second cable seal 220. A first cable through hole adapted to mate with the first cable 1 is formed in the first cable seal 210. A second cable through hole 222 adapted to mate with the second cable 2 and a third cable through hole 223 adapted to mate with the third cable 3 are formed in the second cable seal 220.

As shown in FIGS. 1 to 9, in the illustrated embodiment, the outer diameter of the first cable 1 is larger than that of the second cable 2 and the third cable 3, and the inner diameter of the first cable through hole is larger than that of the second cable through hole 222 and the third cable through hole 223. The outer diameter of the third cable 3 is larger than the outer diameter of the second cable 2, and the inner diameter of the third cable through hole 223 is larger than the inner diameter of the second cable through hole 222.

As shown in FIGS. 1 to 9, in the illustrated embodiment, the first cable seal 210 is a seal ring and is sleeved on the first cable 1. The second cable seal 220 includes a block shaped sealing body 221, and the second cable through hole 222 and the third cable through hole 223 are formed in the sealing body 221.

As shown in FIGS. 1 to 9, in an exemplary embodiment of the present invention, a connector is also disclosed, which includes a housing 100 and the connector housing assembly. The inner housing 200 is at least partially accommodated in the outer housing 100 and fixedly connected with the outer housing 100. The outer housing 100 is provided around the housing seal 230, and a gap is formed between the outer housing 100 and the housing seal 230 for accommodating the mating housing of the mating connector.

Although not shown, in an exemplary embodiment of the present invention, there is also disclosed a connector assembly including the aforementioned connector and a mating connector adapted to mate with the aforementioned connector.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although several exemplary embodiments have been shown and described, it would be appreciated by those skilled in the art that various changes or modifications may be made in these embodiments without departing from the principles and spirit of the disclosure, the scope of which is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present invention are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

## Claims

1. A connector housing assembly, comprising:
an inner housing (200) which is formed with terminal mounting holes (211, 212, 213) for fixedly mounting a plurality of terminals (10, 20, 30);
a cable seal (210, 220) installed in the inner housing (200) for realizing the sealing between the inner housing (200) and a cable (1, 2, 3) extending into the inner housing (200); and
a housing seal (230) sleeved on the outer side of the inner housing (200) for realizing the sealing between the inner housing (200) and a mating housing of a mating connector.

2. The connector housing assembly according to claim 1,
wherein the cable seal (210, 220) comprises of:
a first cable seal (210) for sealing some cables (1) of the connector; and / or
a second cable seal (220) for sealing other cables (2, 3) of the connector.

3. The connector housing assembly according to claim 2,
wherein a first accommodation chamber (201) adapted to accommodate the first cable seal (210) and a second accommodation chamber (202) adapted to accommodate the second cable seal (220) are formed in the inner housing (200);
wherein a seal mounting portion (203) adapted to mount the housing seal (230) is formed on the outer side of the inner housing (200).

4. The connector housing assembly according to claim 3,
wherein the housing seal (230) is a seal ring which is positioned in a seal mounting portion (203) formed on the outer side of the inner housing (200);
wherein an outer circumferential surface of the housing seal (230) is radially spaced apart from an inner circumferential surface of the outer housing (100) of a connector by a predetermined gap to allow the mating housing to be inserted between the housing seal (230) and the outer housing (100).

5. The connector housing assembly according to claim 1,
wherein the cable seal (210, 220) is adapted to simultaneously seal a plurality of different types and / or a plurality of different sizes of cables (1, 2, 3);
wherein the cable seal (210, 220) includes a first cable seal (210) and a second cable seal (220),
wherein at least two different cable through holes (202, 203) are formed in at least one of the first cable seal (210) and the second cable seal (220).

6. The connector housing assembly according to any one of claims 1-5, further comprising:
a cable (1, 2, 3) extending into the inner housing (200) and passing through the cable seal (210, 220),
wherein the cable (1, 2, 3) comprises of:
a first cable (1) for transmitting a first signal;
a second cable (2) for transmitting a second signal different from the first signal; and
a third cable (3) for transmitting power.

7. The connector housing assembly according to claim 6, further comprising:
a first terminal (10) provided in the inner housing (200) and electrically connected to the first cable (1);
a second terminal (20) provided in the inner housing (200) and electrically connected to the second cable (2); and
a third terminal (30) provided in the inner housing (200) and electrically connected to the third cable (3).

8. The connector housing assembly according to claim 7, further comprising:
a shield (11) provided in the inner housing (200),
wherein the first cable (1) is used for transmitting Ethernet signals and has a shielding layer, the shield (11) is electrically connected to the shielding layer of the first cable (1), and the first terminal (10) is at least partially accommodated in the shield (11).

9. The connector housing assembly according to claim 6,
wherein the cable seal (210, 220) includes a first cable seal (210) and a second cable seal (220);
wherein a first cable through hole adapted to mate with the first cable (1) is formed in the first cable seal (210);
wherein a second cable through hole (222) adapted to mate with the second cable (2) and a third cable through hole (223) adapted to mate with the third cable (3) are formed in the second cable seal (220).

10. The connector housing assembly according to claim 9,
wherein the outer diameter of the first cable (1) is larger than the outer diameter of the second cable (2) and the third cable (3), and the inner diameter of the first cable through hole is larger than the inner diameter of the second cable through hole (222) and the third cable through hole (223); and
wherein the outer diameter of the third cable (3) is larger than the outer diameter of the second cable (2), and the inner diameter of the third cable through hole (223) is larger than the inner diameter of the second cable through hole (222).

11. The connector housing assembly according to claim 9,
wherein the first cable seal (210) is a seal ring and is sleeved on the first cable (1);
wherein the second cable seal (220) includes a block shaped sealing body (221) in which the second cable through hole (222) and the third cable through hole (223) are formed.

12. The connector housing assembly according to claim 7,
wherein an elastic latch (240) for locking the first terminal (10) in the inner housing (200) is integrally formed on the inner housing (200); and
wherein a slot (250) for inserting a locking member (300) is formed in the inner housing (200), and the second terminal (20) and the third terminal (30) are adapted to be locked in the inner housing (200) by the locking member (300) inserted into the slot (250).

13. The connector housing assembly according to claim 8,
wherein the inner housing (200) is formed with a mounting portion (260) adapted to mount a shield spring piece (40), and the shield (11) is adapted to be electrically connected to a mating shield of the mating connector via the shield spring piece (40) mounted on the mounting portion (260).

14. A connector, comprising:
the connector housing assembly according to any one of claims 1-13; and
an outer housing (100),
wherein the inner housing (200) is at least partially accommodated in the outer housing (100) and fixedly connected with the outer housing (100),
wherein the outer housing (100) is arranged around the housing seal (230), and a gap is formed between the outer housing (100) and the housing seal (230) for accommodating a mating housing of a mating connector.

15. A connector assembly, comprising:
the connector according to claim 14; and
a mating connector adapted to mate with the connector.
